# EUROPEAN PATENT APPLICATION

(11) **EP 1 158 195 A2**
(43) Date of publication of application: **28.11.2001**
(21) Application number: 01111212.5
(22) Date of filing: 14.05.2001
(51) Int. Cl.: F16D 55/22, F16D 65/00

(54) **Disc brake actuator with caliper and heat protection of the boot**

(30) Priority: 24.05.2000 IT MI001150
(71) Applicant: Meritor HVS Cameri S.p.A., 28060 Cameri (NO) (IT)
(72) Inventor: Conti, Roberto, 21057 Olgiate Olona (VA) (IT); Bellomi, Giovanni, 28100 Novara (IT)
(74) Representative: Degwert, Hartmut, Dipl.-Phys.

(57) **Abstract**

A disk brake actuator for vehicles comprises a caliper (10) mounted on a vehicle hub, a piston (14) threaded in a sleeve and provided at an end thereof with a peripheral groove (36) and a pressure plate (12) connected with a flat face (22) to the end of the piston (14) by means of a bolt (16). The caliper (10) has an opening (34) into which the end of the piston (14) extends. An annular gap between an edge of the opening (34) and the end of the piston (14) is closed by a belows-type boot (42). To prevent failure of the boot (42) due to excessive heat, the present invention provides a disk brake actuator wherein an annular heat protection screen (40) extends between the boot and the pressure plate.

## Description

The present invention relates to a disk brake actuator for vehicles.

Typically, a disk brake actuator comprises a caliper, a pressure plate with a friction pad consisting of a friction material mounted thereon, and a piston threaded in a sleeve attached to the actuation block moving inside the caliper. The piston has an end rigidly connected to the pressure plate for urging the pressure plate, and thus the friction pad, against a side face of a rotor disk which is typically mounted on the hub of a vehicle wheel. The caliper has an opening through which the piston, or at least the end thereof, extends, an annular gap being provided between the edge of the opening in the caliper and the periphery of the piston to ensure free movability of the piston with respect to the caliper. This annular gap, however, is sealed by a bellows-type boot that has an outer periphery mounted at the edge of the caliper opening and an inner periphery engaged about the piston end. The bellows-type sleeve prevents dust, other extraneous material and humidity from access to the piston and sleeve, simultaneously admitting free axial and radial movement of the piston with respect to the caliper.

The sealing function of the bellows-type sleeve is essential to reliable operation of the piston and cylinder.

The bellows-type boot is typically formed of rubber. In operation of a disk brake, heat is generated at the interface between the wheel rotor and the friction pad. As the bellows-type boot is adjacent to the pressure plate which, in turn, is exposed to heat from the friction pad, the sleeve is also exposed to heat.

To prevent failure of the bellows-type boot due to excessive heat, the present invention provides a disk brake actuator wherein an annular heat protection screen extends between the boot and the pressure plate. The heat protection screen is a bar against transmission of heat by radiation and by convection. By reducing the transmission of heat from the pressure plate to the bellows-type boot, a thermal degradation of the material of the boot, usually rubber, is avoided.

The heat protection screen is preferably of a material such as polytetrafluorethylene (Teflon).

In the preferred embodiment the pressure plate has an integral boss with a raised wall portion and a flat face for connection to the piston end, and the heat protection screen has a skirt portion extending along the raised wall portion of the boss. The heat protection screen has an inner edge mounted in a peripheral groove at the piston end. The peripheral groove has a radial side wall formed by the flat face of the boss on the pressure plate. The heat protection screen is easily mounted in the peripheral groove prior to assembly of the pressure plate and piston, the groove having an open side prior to such assembly.

To prevent any direct contact of the bellows-type boot with the pressure plate or with the piston which is in directly connected to the pressure plate, the boot has an inner periphery received within the inner edge of the heat protection screen.

Further advantages and features will become apparent from the following detailed description with reference to the drawings. In the drawings:
Fig. 1 is a partial sectional view of a disk brake actuator,
Fig. 2 is an exploded view illustrating assembly of the disk brake actuator depicted in Fig. 1.

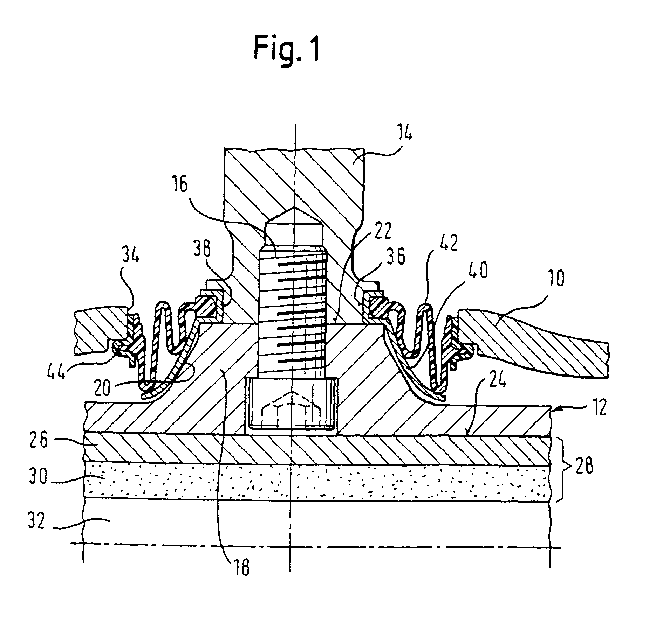

Referring first to Fig. 1, the disk brake actuator comprises a generally conventional caliper 10 mounted on a vehicle hub (not shown), a piston 14 threaded in a sleeve (not shown) mounted on an actuation block (not shown) moving into the caliper 10 and a pressure plate 12 connected to an end of piston 14 by means of a bolt 16. For connection to the piston 14, the pressure plate 12 has an integral boss 18 defined by a raised wall portion 20 and a flat face 22. Opposite flat face 22, pressure plate 12 has a plane face 24 abutting a back plate 26 of a friction pad 28 which includes a friction lining 30 carried by back plate 26. The friction pad 28 cooperates with a rotor disk 32 mounted on the vehicle wheel.

Caliper 10 has an opening 34 into which the end of piston 14 extends to abut the flat face 22 of pressure plate 12. A peripheral groove 36 is provided at the end of piston 14 for accommodation of an inner edge 38 of a heat protection screen 40. The heat protection screen has a skirt portion extending from the inner edge 38 along the raised wall portion 20 of boss 18. A bellows-type boot 42, has an inner periphery seated within inner edge 38 of the heat protection screen 40 and an outer periphery mounted within opening 34 of caliper 10 by means of a mounting ring 44. The boot 42 is of a flexible material, typically rubber, and seals the annular gap between the edge of caliper opening 34 and the end of piston 14, permitting both axial and radial movement of piston 14. The skirt portion of heat protection screen 40 extends between the pressure plate 12 and the boot 42, preventing not only direct contact between the sleeve and any hot surface areas on the pressure plate and piston, but also transmission of heat by radiation. An appropriate material for the heat protection screen 40 is polytetrafluorethylene (Teflon).

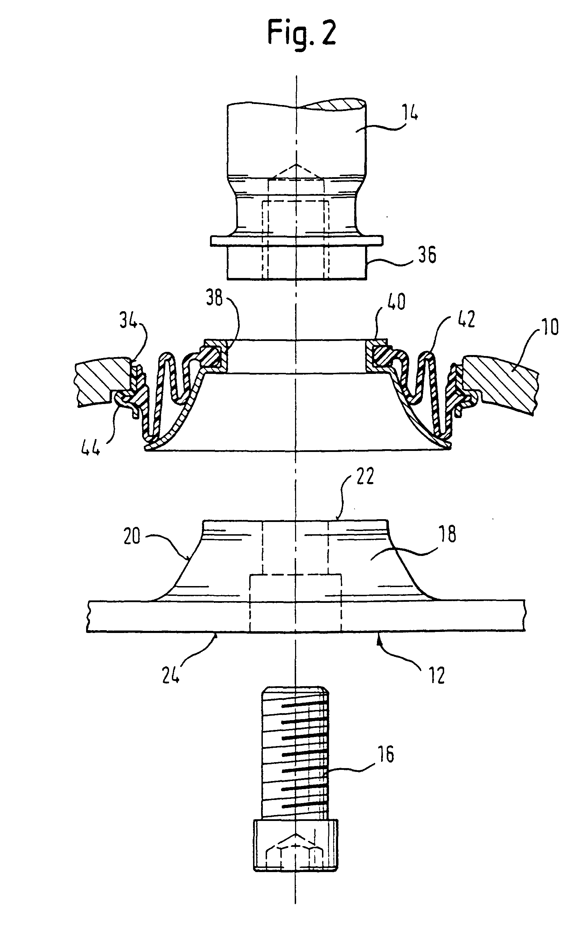

As seen more clearly in Fig. 2, to permit easy installation of the heat protection screen 40, the groove 36 is defined between flat face 22 of pressure plate 12 and a radial annular wall at the end of piston 14 so that, before assembly of pressure plate 12 and piston 14, the groove 36 has an open side, and the inner edge 38 of the heat protection screen 40 can be fitted in the groove without the need of radial expansion. The piston 14 and pressure plate 12 are then assembled by means of bolt 16.

## Claims

1. A disk brake actuator comprising a caliper (10), a pressure plate (12) carrying a pad of friction material and a piston (14) movable relative to the caliper (10), the piston (14) having an end rigidly connected to the pressure plate (12), and the caliper (10) having an opening (34) into which the piston (14) end extends, an annular gap between an edge of the opening (34) and the piston (14) end being closed by a bellows-type annular boot (42) that has an outer periphery mounted at the edge of the caliper opening (34) and an inner periphery engaged about the piston (14) end, and an annular heat protection screen (40) extending between the bellows-type boot (42) and the pressure plate (12).

2. The disk brake actuator of claim 1, wherein the pressure plate (12) has an integral boss (18) with a raised wall portion (20) and a flat face (22) for connection to the piston end, and the heat protection screen (40) has a skirt portion extending along the raised wall portion (20) of the boss (18).

3. The disk brake actuator of claim 1 or claim 2, wherein the heat protection screen (40) has an inner edge (38) mounted in a peripheral groove (36) at the piston (14) end.

4. The disk brake actuator of claim 3, wherein the inner periphery of the bellows-type boot (42) is received within the inner edge (38) of the heat protection screen (40), thereby preventing direct contact of the boot (42) with the piston (14).

5. The disk brake actuator of claim 3, wherein the peripheral groove (36) has a radial annular wall formed by a flat face (22) of the pressure plate (12) at a connection plane between the piston end and the pressure plate (12).

6. The disk brake actuator of claim 1, wherein the heat protection screen (40) is of a material such as polytetrafluorethylene (Teflon).
